# EUROPÄISCHE PATENTSCHRIFT

(11) **EP 1 186 200 B1**
(45) Veröffentlichungstag und Bekanntmachung des Hinweises auf die Patenterteilung: **16.02.2005**
(21) Anmeldenummer: 00943621.3
(22) Anmeldetag: 23.05.2000
(51) Int. Cl.: H04Q 11/04

(54) **VERFAHREN UND EINRICHTUNG ZUM ÜBERMITTELN VON DATEN**
METHOD AND DEVICE FOR TRANSMITTING DATA
PROCEDE ET DISPOSITIF POUR LA TRANSMISSION DE DONNEES

(30) Priorität: 15.06.1999 DE 19927291
(43) Veröffentlichungstag der Anmeldung: 13.03.2002
(73) Patentinhaber: SIEMENS AKTIENGESELLSCHAFT, 80333 München (DE)
(72) Erfinder: STÖCKL, Werner, D-82065 Baierbrunn (DE); TIETSCH, Michael, D-86916 Kaufering (DE)
(86) Internationale Anmeldenummer: PCT/DE2000/001645
(87) Internationale Veröffentlichungsnummer: WO 2000/077975

(56) Entgegenhaltungen:
- EP-A- 0 473 066
- US-A- 5 818 842

## Beschreibung

Die Erfindung betrifft ein Verfahren zum Übermitteln von Daten von einer ersten Routereinrichtung über ein externes Kommunikationsnetz zu einer zweiten Routereinrichtung, wodurch insbesondere an diese Routereinrichtungen angeschlossene lokale Netze gekoppelt werden können. Außerdem betrifft die Erfindung eine Netzübergangseinheit zur Realisierung des Verfahrens.

Lokale Netze, die häufig auch als LANs (local area network) bezeichnet werden, können nach gängiger Praxis über Routereinrichtungen verbunden werden, durch die zwischen den lokalen Netzen auszutauschende Datenpakete vermittelt werden. Die Vermittlung der Datenpakete erfolgt dabei auf der Ebene der Vermittlungsschicht (Schicht 3) des OSI-Referenzmodells anhand von in den Datenpaketen enthaltenen, ein Ubermittlungsziel identifizierenden Netzwerkadressen. Als Netzwerkadressen werden in diesem Zusammenhang Adressen der Vermittlungsschicht bezeichnet. Ein häufig verwendetes Vermittlungsprotokoll der Vermittlungsschicht ist das sogenannte Internet-Protokoll (IP), auf dessen Grundlage Datenpakete anhand von weltweit eindeutigen Netzwerkadressen, sogenannten Internet-Protokoll-Adressen, im folgenden auch als IP-Adressen bezeichnet, vermittelt werden.

Zur Vermittlung eines Datenpakets mit IP-Adresse wird von einer Routereinrichtung die IP-Adresse ausgewertet und abhängig davon ein dem übermittlungsziel möglichst nahegelegener Netzknoten in einem der an die Routereinrichtung angeschlossenen lokalen Netze bestimmt, an den das Datenpaket als nächstes zu übermitteln ist. Sofern sich das Übermittlungsziel in einem dieser lokalen Netze befindet ist dieser Netzknoten bereits mit dem Übermittlungsziel identisch. Um das Datenpaket zu diesem Netzknoten zu übermitteln, wird das Datenpaket von der Routereinrichtung mit einer diesen Netzknoten eindeutig identifizierenden Hardware-Adresse versehen und in Richtung dieses Netzknotens weitergeleitet. Dieser erkennt anhand der mit dem Datenpaket übertragenen Hardware-Adresse, daß das Datenpaket an ihn adressiert ist und empfängt das Datenpaket zur Weiterverarbeitung oder zur Weiterleitung.

Hardware-Adressen, die auch als MAC-Adressen (medium access control) bezeichnet werden, sind auf der Sicherungsschicht (Schicht 2) des OSI-Referenzmodells angesiedelte, weltweit eindeutige Adressen, mit denen Netzwerkeinrichtungen - meist Netzwerkkarten - herstellerseitig versehen sind. Die Hardware-Adresse einer Netzwerkeinrichtung ist fest in diese eingespeichert und kann nicht mehr verändert werden.

Gemäß dem aus den Patentschriften EP-A-0 473 066 bzw. US 5 818 842 bekannten Stand der Technik, können lokale Netze auch über ein externes Kommunikationsnetz, wie z.B. ein Weitverkehrsnetz (WAN) oder ein sogenanntes Backbone-Netz, vorzugsweise ein Breitbandnetz, gekoppelt werden. Bei einer derartigen Kopplung von lokalen Netzen ist der gesamte Datenaustausch zwischen den lokalen Netzen über das Kommunikationsnetz zu führen.

Unter der Bezeichnung IPoA (IP over ATM) ist ein Verfahren zur Kopplung von lokalen Netzen über ein ATM-Netz (ATM: asynchronous transfer mode) als Kommunikationsnetz bekannt, bei dem mit IP-Adressen versehene Datenpakete transparent von einem ersten lokalen Netz über das ATM-Netz in ein zweites lokales Netz übertragen werden können. Aspekte dieses Verfahren sind beispielsweise in der Internet-Spezifikation RFC 2225 beschrieben. Der Anschluß der zu koppelnden lokalen Netze an das ATM-Netz erfolgt bei diesem Verfahren jeweils über eine Netzzugangseinheit, die unter anderem zur Umsetzung von Übertragungsprotokollen dient.

Zur Übermittlung eines mit einer IP-Adresse versehenen Datenpakets aus dem ersten lokalen Netz zu einem durch die IP-Adresse identifizierten Übermittlungsziel im zweiten lokalen Netz wird von der Netzzugangseinheit die IP-Adresse des Datenpaketes ausgewertet. Anhand der IP-Adresse wird derjenige ATM-Austritts-Netzknoten bestimmt, an den das das Ubermittlungsziel enthaltende lokale Netz angekoppelt ist. In der Regel ist dieser ATM-Austritts-Netzknoten die Netzzugangseinheit dieses lokalen Netzes. Die zu übermittelnden Datenpakete werden daraufhin der ATM-Adresse dieser Netzzugangseinheit zugeordnet und in das ATM-Netz weitergeleitet, das die Datenpakete zu dieser Netzzugangseinheit übermittelt. Von dieser werden die Datenpakete nach Umsetzung des Übertragungsprotokolls schließlich in das zweite lokale Netz zum Übermittlungsziel übertragen.

Die notwendige Auswertung von IP-Adressen zur Leitwegbestimmung ist ein verhältnismäßig aufwendiger Vorgang und erfordert von der Netzzugangseinheit Routingfunktionalität, die sich im allgemeinen nur durch hohen Schaltungsaufwand realisieren läßt. Eine solche Routingfunktionalität ist indessen in herkömmlichen Routereinrichtungen zum direkten Verbinden von lokalen Netzen bereits enthalten. Da derartige Routereinrichtungen mittlerweile weitgehend standardisiert und weit verbreitet sind, sind diese Routereinrichtungen im Gegensatz zu IPoA-fähigen Netzzugangseinheiten, mit verhältnismäßig geringem Aufwand herstellbar. Es wäre daher erstrebenswert, diese Routereinrichtungen auch bei der Kopplung von lokalen Netzen über ein externes Kommunikationsnetz einsetzen zu können. Bei einer Kopplung von lokalen Netzen durch das IPoA-Verfahren ist eine Verwendung von zum direkten Verbinden lokaler Netze konzipierten Routereinrichtungen nicht vorgesehen.

Es ist Aufgabe der vorliegenden Erfindung ein Verfahren zum übermitteln von Daten von einer ersten Routereinrichtung über ein Kommunikationsnetz zu mindestens einer weiteren Routereinrichtung anzugeben, das mit geringem Implementierungsaufwand realisierbar ist. Außerdem ist eine Netzübergangseinheit zur Realisierung des Verfahrens anzugeben.

Gelöst wird diese Aufgabe durch ein Verfahren mit den Merkmalen des Patentanspruchs 1 und eine Netzübergangseinheit mit den Merkmalen des Patentanspruchs 11.

Um Daten von einer ersten Routereinrichtung über ein Kommunikationsnetz zu einer zweiten Routereinrichtung zu übertragen, ist die erste Routereinrichtung über eine Netzübergangseinheit an das Kommunikationsnetz angeschlossen. Die Netzübergangseinheit dient dabei unter anderem zur Umsetzung zwischen einem von der ersten Routereinrichtung verwendeten Übertragungsprotokoll und einem davon verschiedenen, im Kommunikationsnetz verwendeten Ubertragungsprotokoll.

Durch die Erfindung können auf einfache Weise lokale Netze über daran angeschlossene Routereinrichtungen, die mittels Netzübergangseinheiten über ein Kommunikationsnetz verbunden werden, gekoppelt werden. Ein wesentlicher Vorteil der Erfindung besteht darin, daß zur Durchführung des Verfahrens herkömmliche, zur direkten Kopplung von lokalen Netzen konzipierte Routereinrichtungen verwendet werden können. Dies wird unter anderem dadurch erreicht, daß die Netzübergangseinheit von der ersten Routereinrichtung gesendete Hardware-Adressen, die eigentlich zur Identifizierung von Netzwerkeinrichtungen eines lokalen Netzes vorgesehen sind, und die den Hardware-Adressen zugeordneten Daten stellvertretend für diese Netzwerkeinrichtungen empfängt. Eine empfangene Hardware-Adresse wird von der Netzübergangseinheit dazu verwendet, eine der Hardware-Adresse in der Netzübergangseinheit zugeordnete Netzwerkadresse zu bestimmen, die einen Austrittspunkt des Kommunikationsnetzes identifiziert. Anhand dieser Netzwerkadresse werden die Daten über das Kommunikationsnetz zum Austrittspunkt übertragen, wo die Daten der zweiten Routereinrichtung zugeführt werden. Durch die direkte Zuordnung von Netzwerkadressen zu Hardware-Adressen in der Netzübergangseinheit kann eine Netzwerkadresse auf sehr einfache Weise, z.B. durch Zugriff auf eine Zuordnungstabelle, anhand einer Hardware-Adresse bestimmt werden. Dagegen wäre eine Bestimmung einer Netzwerkadresse eines Austrittspunktes anhand einer IP-Adresse von zu übertragenden Daten wesentlich aufwendiger. Da eine IP-Adresse ein Übermittlungsziel am Ende einer Übertragungskette bezeichnet und prinzipiell jede mit einer IP-Adresse versehene Einrichtung weltweit adressiert werden könnte, ist eine direkte Zuordnung von IP-Adressen zu Netzwerkadressen von Austrittspunkten nicht sinnvoll. Im Gegensatz dazu ist die Anzahl der durch eine erfindungsgemäße Netzübergangseinheit zu verwaltenden Hardware-Adressen dadurch beschränkt, daß Hardware-Adressen eigentlich nur zur Adressierung von unmittelbar erreichbaren Netzwerkeinrichtungen vorgesehen sind, so daß eine direkte Zuordnung von Hardware-Adressen zu Netzwerkadressen mit geringem Speicheraufwand möglich ist.

Vorteilhafte Ausführungsformen und Weiterbildungen der Erfindung sind in den Unteransprüchen angegeben.

Gemäß einer vorteilhaften Weiterbildung der Erfindung kann in der Netzübergangseinheit eine Zuordnungstabelle vorgesehen sein, in der eine oder mehrere Hardware-Adressen jeweils einer Netzwerkadresse zugeordnet abgespeichert sind. Damit kann die Zuordnung einer Netzwerkadresse zu einer von der ersten Routereinrichtung kommenden Hardware-Adresse über einen schnell ausführbaren Tabellenzugriff erfolgen.

In dieser Zuordnungstabelle kann jeder darin enthaltenen Hardware-Adresse zusätzlich noch eine IP-Adresse der durch die betreffende Hardware-Adresse identifizierten Routereinrichtung zugeordnet sein. Diese zusätzliche Zuordnung erlaubt es, Anfragen der ersten Routereinrichtung nach der Hardware-Adresse einer Routereinrichtung, die durch eine in der Anfrage enthaltenen IP-Adresse identifiziert wird, durch die Netzübergangseinheit - stellvertretend für die betreffende Routereinrichtung - zu beantworten. Derartige Anfragen können beispielsweise im Rahmen des sogenannten ARP-Protokolls (address resolution protocol) erfolgen. Aufgrund der stellvertretenden Beantwortung solcher Anfragen durch die Netzübergangseinheit, sind keine über das Kommunikationsnetz durchzuführenden Anfragen bei einer betreffenden Routereinrichtung erforderlich. Dadurch wird insbesondere die Belastung des Kommunikationsnetzes verringert.

Ein Ausführungsbeispiel der Erfindung wird nachfolgend anhand der Zeichnung näher erläutert.

Dabei zeigen
- Fig 1: drei über ein ATM-Netz gekoppelte lokale Netze und
- Fig 2: eine Netzübergangseinheit,
jeweils in schematischer Darstellung.

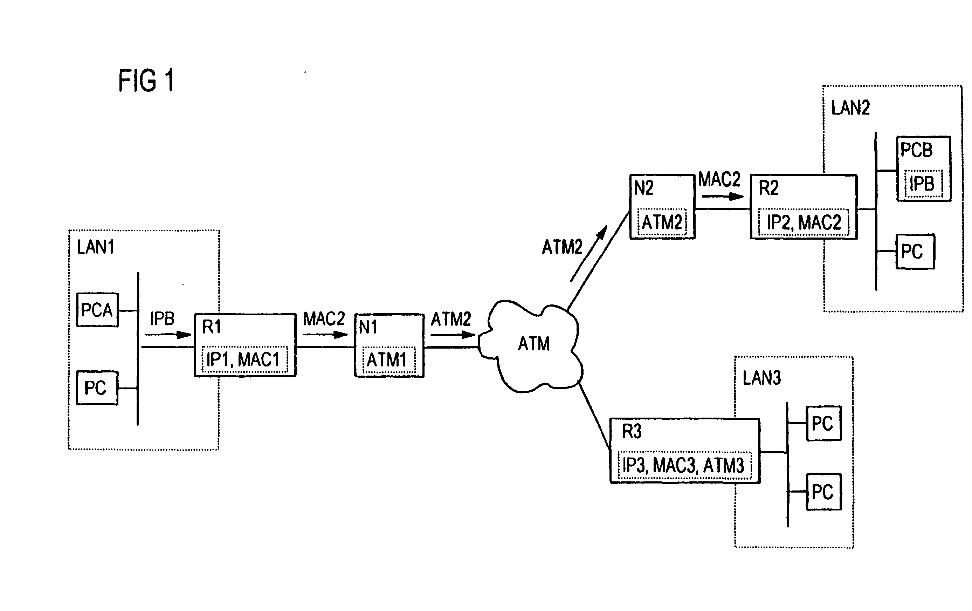

In Fig 1 sind drei über ein ATM-Netz ATM als externes Kommunikationsnetz gekoppelte lokale Netze LAN1, LAN2 und LAN3 schematisch dargestellt. Die lokalen Netze LAN1, LAN2 und LAN3 umfassen jeweils mehrere, z.B. über Ethernet oder FDDI (fiber distributed data interface), lokal gekoppelte Personalcomputer PC, PCA, PCB und sind jeweils über eine Routereinrichtung R1 bzw. R2 bzw. R3 an das ATM-Netz ATM gekoppelt. Während die Routereinrichtung R1 des lokalen Netzes LAN1 und die Routereinrichtung R2 des lokalen Netzes LAN2 jeweils über eine Netzübergangseinheit N1 bzw. N2 an das ATM-Netz ATM angeschlossen sind, ist die Routereinrichtung R3 des lokalen Netzes LAN3 direkt mit dem ATM-Netz ATM verbunden. Die Routereinrichtungen R1 und R2 sind herkömmliche Routereinrichtungen, die eigentlich zur direkten Verbindung von lokalen Netzen konzipiert sind. Demgegenüber muß die Routereinrichtung R3 aufgrund ihres direkten Anschlusses an das ATM-Netz ATM, außer herkömmlicher Routerfunktionalität auch Mittel zur Protokollumsetzung zwischen einem im ATM-Netz ATM und einem im lokalen Netz LAN3 verwendeten Übertragungsprotokoll aufweisen.

Den Routereinrichtungen R1, R2 und R3 ist in der angegebenen Reihenfolge jeweils eine MAC-Adresse MAC1, MAC2 bzw. MAC3 als Hardwareadresse herstellerseitig zugeordnet sowie jeweils eine IP-Adresse IP1, IP2 bzw. IP3 per Systemadministration zugewiesen. Weiterhin ist der Routereinrichtung R3 zusätzlich eine ATM-Adresse ATM3 und den Netzübergangseinheiten N1 und N2 jeweils eine ATM-Adresse ATM1 bzw. ATM2 als Netzwerkadresse zugeordnet. Dem Personalcomputer PCB ist ferner die IP-Adresse IPB zugewiesen. Die Routereinrichtungen R1, R2 und R3, die Netzübergangseinheiten N1 und N2 sowie der Personalcomputer PCB werden durch die jeweils zugeordneten Adressen MAC1, MAC2, MAC3, IP1, IP2, IP3, IPB, ATM1, ATM2 bzw. ATM3 jeweils eindeutig identifiziert.

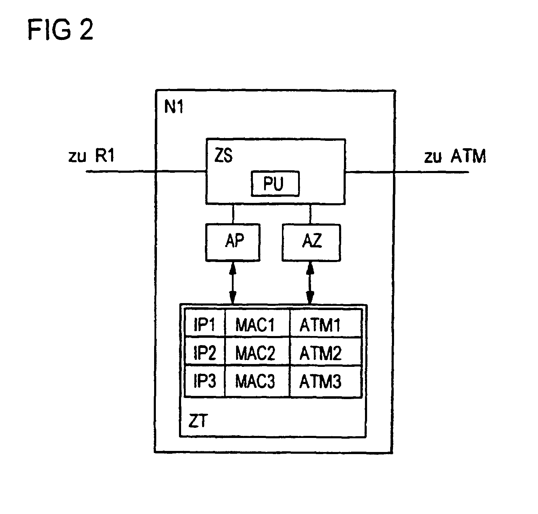

Fig 2 zeigt in schematischer Darstellung die Netzübergangseinheit N1, über die die Routereinrichtung R1 an das ATM-Netz ATM gekoppelt ist. Die Netzübergangseinheit N1 enthält als Funktionskomponenten eine zentrale Steuerung ZS mit einer Proto-koll-Umsetzeinrichtung PU, eine Adreß-Prüfeinrichtung AP sowie eine Adreß-Zuordnungseinrichtung AZ. Die Adreß-Prüfeinrichtung AP und die Adreß-Zuordnungseinrichtung AZ sind jeweils mit der zentralen Steuerung ZS verbunden und haben ferner Zugriff auf eine ebenfalls in der Netzübergangseinheit N1 enthaltene Zuordnungstabelle ZT. Die Zuordnungstabelle ZT, die beispielsweise in einem reservierten Teil eines Speichers gespeichert sein kann, enthält in diesem Ausführungsbeipiel entsprechend der Anzahl der gekoppelten lokalen Netze LAN1, LAN2 und LAN3 zumindest drei Einträge:
einen ersten Eintrag mit der IP-Adresse IP1, der MAC-Adresse MAC1 und der ATM-Adresse ATM1,
einen zweiten Eintrag mit der IP-Adresse IP2, der MAC-Adresse MAC2 und der ATM-Adresse ATM2 sowie
einen dritten Eintrag mit der IP-Adresse IP3, der MAC-Adresse MAC3 und der ATM-Adresse ATM3.
Die Elemente jedes Eintrages sind dabei einander zugeordnet gespeichert.

Im folgenden wird ein im Rahmen der Kopplung der lokalen Netze LAN1, LAN2, LAN3 erforderlicher Datenaustausch zwischen den lokalen Netzen am Beispiel einer Datenübermittlung vom lokalen Netz LAN1 zum lokalen Netz LAN2 betrachtet.

Zur Übermittlung von Daten von einem im lokalen Netz LAN1 befindlichen Personalcomputer PCA zu einem im lokalen Netz LAN2 befindlichen Ziel-Personalcomputer PCB werden die Daten in Form von Datenpaketen mit der IP-Adresse IPB des Ziel-Personalcomputers PCB zur Routereinrichtung R1 übermittelt. Die Routereinrichtung R1 ermittelt anhand einer in ihr enthaltenen Routingtabelle (nicht dargestellt), daß der durch die IP-Adresse IPB identifizierte Ziel-Personalcomputer PC2 über die Routereinrichtung R2 erreichbar ist und versieht infolgedessen die zu übermittelnden Datenpakete mit der MAC-Adresse MAC2 dieser Routereinrichtung R2. Die IP-Adresse IPB des Ziel-Personalcomputers PCB bleibt in den Datenpaketen dabei unverändert erhalten. Die Datenpakete werden von der Routereinrichtung R1 anschließend an die Netzübergangseinheit N1 weitergeleitet.

In der Netzübergangseinheit N1 wird von der Adreß-Prüfeinrichtung AP überprüft, ob die empfangene MAC-Adresse MAC2 in der Zuordnungstabelle ZT enthalten ist. Ist dies der Fall, wird die der MAC-Adresse MAC2 in der Zuordnungstabelle ZT zugeordnete ATM-Adresse - hier ATM2 - bestimmt, durch die die Netzübergangseinheit N2 identifiziert wird, über die die Routereinrichtung R2 angekoppelt ist. Die zu übermittelnden Datenpakete werden daraufhin von der Protokoll-Umsetzeinrichtung PU gemäß dem im ATM-Netz ATM verwendeten übertragungsprotokoll in ATM-Zellen umgesetzt, denen die ATM-Adresse ATM2 als Netzwerkadresse zugeordnet wird. Die ATM-Zellen werden anschließend in das ATM-Netz ATM weitergeleitet und von diesem zu der durch die ATM-Adresse ATM2 identifizierten Netzübergangseinheit N2 übertragen. Die Übertragung kann dabei sowohl über eine oder mehrere Festverbindungen (PVC: permanent virtual circuit) als auch über eine oder mehrere bei Bedarf aufzubauende Wählverbindungen (SVC: switched virtual circuit) des ATM-Netzes ATM erfolgen. In der Netzübergangseinheit N2, in der ebenfalls eine Zuordnungstabelle (nicht dargestellt) mit den gleichen Einträgen wie die Zuordnungstabelle ZT enthalten ist, werden die ATM-Zellen wieder in Datenpakete gemäß IP-Protokoll umgesetzt, die mit der in der Zuordnungstabelle der Netzübergangseinheit N2 enthaltenen MAC-Adresse MAC2 versehen werden. Die Datenpakete werden anschließend zur Routereinrichtung R2 weitergeleitet, die die Datenpakete anhand der diesen zugeordneten MAC-Adresse MAC2 als an sich adressiert erkennt. Die Routereinrichtung R2 leitet daraufhin die empfangenen Datenpakete nach Auswertung von deren IP-Adresse IPB zu dem durch die IP-Adresse IPB identifizierten Ziel-Personalcomputer PCB weiter.

Eine Übertragung von Datenpaketen vom lokalen Netz LAN1 zu einem im lokalen Netz LAN3 befindlichen Ziel-Personalcomputer PC verläuft weitgehend analog, mit dem Unterschied, daß die Datenpakete in diesem Fall über die ATM-Adresse ATM3 direkt an die Routereinrichtung R3 adressiert werden. Die Routereinrichtung R3 muß damit sowohl Protokollumsetzfunktionalität als auch Routingfunktionalität aufweisen.

Die Netzübergangseinheit N1 hat in diesem Ausführungsbeispiel außer einer Datenübertragungsfunktion auch noch die Funktion Anfragen an Netzwerkeinrichtungen nach deren jeweiliger MAC-Adresse, z.B. im Rahmen des häufig verwendeten ARP-Protokolls (adress resolution protocol), stellvertretend für die jeweilige Netzwerkeinrichtung zu beantworten. Im Rahmen einer solchen Anfrage wird von der anfragenden Routereinrichtung R1 an alle angeschlossenen Netzwerkeinrichtungen eine IP-Adresse, übertragen, mit dem Auftrag, die MAC-Adresse der durch die IP-Adresse identifizierten Netzwerkeinrichtung, falls bekannt, an die Routereinrichtung R1 zu senden. Beispielsweise kann so eine Anfrage nach der MAC-Adresse der durch die IP-Adresse IP2 identifizierten Routereinrichtung R2 von der Routereinrichtung R1 zur Netzübergangseinheit N1 übermittelt werden. Die Netzübergangseinheit N1 prüft in einem solchen Fall zunächst, ob die mit der Anfrage übertragene IP-Adresse, hier IP2, in der Zuordnungstabelle ZT enthalten ist. Falls dies zutrifft, wird die Anfrage von der Netzübergangseinheit N1 durch Ubersendung der dieser IP-Adresse in der Zuordnungstabelle ZT zugeordneten MAC-Adresse, hier MAC2, an die anfragende Routereinrichtung R1 beantwortet. Die Beantwortung erfolgt dabei stellvertretend für die durch die IP-Adresse identifizierten Netzwerkeinrichtung, hier R2.

Durch die in den Netzübergangseinheiten N1, N2 durchgeführte Umsetzung zwischen dem von den Routereinrichtungen R1, R2 verwendeten Übertragungsprotokoll und dem im ATM-Netz ATM verwendeten Übertragungsprotokoll, sowie durch die stellvertretende Beantwortung von Anfragen nach MAC-Adressen durch die Netzübergangseinheiten N1, N2, werden die Routereinrichtungen R1, R2 transparent gekoppelt. Dies erlaubt eine Verwendung preiswerter Routereinrichtungen, die eigentlich zur direkten Kopplung von lokalen Netzen konzipiert sind.

## Patentansprüche

1. Verfahren zum Übermitteln von Daten von einer über eine Netzübergangseinheit (N1) an ein Kommunikationsnetz (ATM) angekoppelten, ersten Routereinrichtung (R1) über das Kommunikationsnetz (ATM) zu einer zweiten Routereinrichtung (R2), bei dem
a) von der ersten Routereinrichtung (R1) den zu übermittelnden Daten, abhängig von deren Übermittlungsziel, eine Hardware-Adresse (MAC2) zugeordnet wird, die gemäß einem verwendeten Routingprotokoll zur Identifizierung einer auf dem Leitweg der Daten zum Übermittlungsziel nachfolgenden Routereinrichtung (R2) vorgesehen ist,
b) die Hardware-Adresse (MAC2) und die Daten von der ersten Routereinrichtung (R1) zur Netzübergangseinheit (N1) übermittelt werden,
c) von der Netzübergangseinheit (N1) geprüft wird, ob die übermittelte Hardware-Adresse (MAC2) mit einer in einem Speicher der Netzübergangseinheit (N1) gespeicherten Hardware-Adresse übereinstimmt, und bei positivem Prüfungsergebnis
d) den Daten von der Netzübergangseinheit (N1) eine der übermittelten Hardware-Adresse (MAC2) in der Netzübergangseinheit (N1) zugeordnete, einen Austrittspunkt (N2) des Kommunikationsnetzes (ATM) identifizierende Netzwerkadresse (ATM2) zugeordnet wird,
e) die Netzwerkadresse (ATM2) und die Daten von der Netzübergangseinheit (N1) nach Umsetzung gemäß einem im Kommunikationsnetz (ATM) verwendeten Übertragungsprotokoll in das Kommunikationsnetz (ATM) weitergeleitet werden, und
f) die Daten vom Kommunikationsnetz (ATM) zum durch die Netzwerkadresse (ATM2) bestimmten Austrittspunkt (N2) übermittelt werden, wo die Daten der zweiten Routereinrichtung (R2) zugeführt werden.

2. Verfahren nach Anspruch 1,
**dadurch gekennzeichnet,**
**daß** die zweite Routereinrichtung (R2) über eine zweite Netzübergangseinheit (N2) als Austrittspunkt an das Kommunikationsnetz (ATM) angekoppelt ist,
den Daten von der zweiten Netzübergangseinheit (N2) eine die zweite Routereinrichtung (R2) identifizierende Hardware-Adresse (MAC2) zugeordnet wird, und
die Daten von der zweiten Netzübergangseinheit (N2) zur zweiten Routereinrichtung (R2) übermittelt werden.

3. Verfahren nach Anspruch 1,
**dadurch gekennzeichnet,**
**daß** die zweite Routereinrichtung als durch die Netzwerkadresse identifizierter Austrittspunkt an das Kommunikationsnetz angekoppelt ist und die Daten aus dem Kommunikationsnetz empfängt.

4. Verfahren nach einem der vorhergehenden Ansprüche,
**dadurch gekennzeichnet,**
**daß** Daten von einem an die erste Routereinrichtung (R1) angeschlossenen, ersten lokalen Netz (LAN1) über die erste Routereinrichtung (R1) zur zweiten Routereinrichtung (R2) und von dieser in ein daran angeschlossenes, zweites lokales Netz (LAN2) übertragen werden.

5. Verfahren nach einem der vorhergehenden Ansprüche,
**dadurch gekennzeichnet,**
**daß** die Zuordnung der Netzwerkadresse (ATM2) zur übermittelten Hardware-Adresse (MAC2) in der Netzübergangseinheit (N1) anhand einer Zuordnungstabelle (ZT) erfolgt, in der eine oder mehrere zur Identifizierung von Routereinrichtungen (R1, R2, R3) vorgesehene Hardware-Adressen (MAC1, MAC2, MAC3) jeweils einer Netzwerkadresse (ATM1, ATM2, ATM3) zugeordnet gespeichert sind.

6. Verfahren nach Anspruch 5,
**dadurch gekennzeichnet,**
**daß** zugeordnet zu einer in der Zuordnungstabelle (ZT) gespeicherten, zur Identifizierung einer Routereinrichtung (R1, R2, R3) vorgesehenen Hardware-Adresse (MAC1, MAC2, MAC3) eine IP-Adresse (IP1, IP2, IP3) der durch die jeweilige Hardware-Adresse identifizierten Routereinrichtung (R1, R2, R3) in der Zuordnungstabelle (ZT) gespeichert ist.

7. Verfahren nach Anspruch 6,
**dadurch gekennzeichnet,**
**daß** eine Anfrage der ersten Routereinrichtung (R1) nach einer Hardware-Adresse einer Routereinrichtung, die durch eine in der Anfrage enthaltene IP-Adresse identifiziert wird, von der Netzübergangseinheit (N1) beantwortet wird, wobei von der Netzübergangseinheit (N1) die der betreffenden IP-Adresse in der Zuordnungstabelle (ZT) zugeordnete Hardware-Adresse an die erste Routereinrichtung (R1) übermittelt wird.

8. Verfahren nach einem der vorhergehenden Ansprüche,
**dadurch gekennzeichnet,**
**daß** als Hardware-Adresse eine MAC-Adresse verwendet wird.

9. Verfahren nach einem der vorhergehenden Ansprüche,
**dadurch gekennzeichnet,**
**daß** die Daten im Kommunikationsnetz (ATM) über bestehende Verbindungen übertragen werden.

10. Verfahren nach einem der vorhergehenden Ansprüche,
**dadurch gekennzeichnet,**
**daß** die Daten im Kommunikationsnetz (ATM) über bei Bedarf aufgebaute Verbindungen übertragen werden.

11. Netzübergangseinheit (N1) zum Verbinden einer ersten Routereinrichtung (R1) mit einem Kommunikationsnetz (ATM) und zum übermitteln von Daten von der ersten Routereinrichtung (R1) über das Kommunikationsnetz (ATM) zu mindestens einer weiteren Routereinrichtung (R2, R3), mit
a) einer Zuordnungstabelle (ZT), in der mindestens eine Hardware-Adresse (MAC2, MAC3), die von der ersten Routereinrichtung (R1) zur Identifizierung der mindestens einen weiteren Routereinrichtung (R2, R3) verwendet wird, jeweils einer einen Austrittspunkt (N2, R3) des Kommunikationsnetzes (ATM) zur betreffenden weiteren Routereinrichtung (R2, R3) identifizierenden Netzwerkadresse (ATM2, ATM3) zugeordnet ist,
b) einer Adreß-Prüfeinrichtung (AP) zum Prüfen, ob eine von der ersten Routereinrichtung (R1) kommende Hardware-Adresse mit einer in der Zuordnungstabelle (ZT) enthaltenen Hardware-Adresse übereinstimmt,
c) einer Adreß-Zuordnungseinrichtung (AZ) zum Zuordnen der von der ersten Routereinrichtung (R1) kommenden, einer jeweiligen Hardware-Adresse zugeordneten Daten zu einer der jeweiligen Hardware-Adresse in der Zuordnungstabelle (ZT) zugeordneten Netzwerkadresse und
d) einer Protokoll-Umsetzeinrichtung (PU) zum Umsetzen und Übertragen der von der ersten Routereinrichtung (R1) kommenden Daten gemäß einem im Kommunikationsnetz (ATM) verwendeten Übertragungsprotokoll, wobei als Adreßinformation die den Daten zugeordnete Netzwerkadresse verwendet wird.

12. Netzübergangseinheit nach Anspruch 11,
**dadurch gekennzeichnet,**
**daß** in der Zuordnungstabelle (ZT) einer darin eingetragenen Hardware-Adresse (MAC1, MAC2, MAC3) eine IP-Adresse (IP1, IP2, IP3) der durch die betreffende Hardware-Adresse identifizierten Routereinrichtung (R1, R2, R3) zugeordnet ist.

13. Netzübergangseinheit nach Anspruch 12,
**gekennzeichnet durch**
eine Adreß-Auflösungseinrichtung zum Beantworten von Anfragen der ersten Routereinrichtung (R1) nach einer Hardware-Adresse einer Routereinrichtung, die **durch** eine in der Anfrage enthaltene IP-Adresse identifiziert wird, **durch** Aufsuchen der dieser in der Zuordnungstabelle (ZT) zugeordneten Hardware-Adresse und deren Übermittlung zur ersten Routereinrichtung (R1).

14. Netzübergangseinheit nach einem der Ansprüche 11 bis 13,
**gekennzeichnet durch**
Mittel zum Eintragen von Adreßinformationen in die Zuordnungstabelle (ZT) .

15. Netzübergangseinheit nach einem der Ansprüche 11 bis 14,
**dadurch gekennzeichnet,**
**daß** das Kommunikationsnetz (ATM) ein ATM-Netz ist.

## Claims

1. Method for transmitting data from a first router device (R1) connected via a network gateway unit (N1) to a communications network (ATM) via the communications network (ATM) to a second router device (R2), in which
a) a hardware address (MAC2), which is provided according to a routing protocol which is used to identify a downstream router device (R2) on the path of the data to the transmission destination, is allocated by the first router device (R1) to the data which are to be transmitted, depending on the transmission destination of the latter,
b) the hardware address (MAC2) and the data are transmitted from the first router device (R1) to the network gateway unit (N1),
c) the network gateway unit (N1) checks whether the transmitted hardware address (MAC2) matches a hardware address stored in a memory of the network gateway unit (N1) and, in the event of a positive check result,
d) a network address (ATM2), which is allocated to the transmitted hardware address (MAC2) in the network gateway unit (N1) and which identifies an exit point (N2) of the communications network (ATM), is allocated to the data by the network gateway unit (N1),
e) the network address (ATM2) and the data are forwarded from the network gateway unit (N1), following conversion according to a transmission protocol used in the communications network (ATM), into the communications network (ATM), and
f) the data are transmitted from the communications network (ATM) to the exit point (N2) defined by the network address (ATM2), where the data are fed to the second router device (R2).

2. Method according to Claim 1,
**characterized in that**
the second router device (R2) is connected via a second network gateway unit (N2) as an exit point to the communications network (ATM),
a hardware address (MAC2) identifying the second router device (R2) is allocated to the data by the second network gateway unit (N2), and
the data are transmitted from the second network gateway unit (N2) to the second router device (R2).

3. Method according to Claim 1,
**characterized in that**
the second router device is connected to the communications network as the exit point identified by the network address and receives the data from the communications network.

4. Method according to one of the preceding claims,
**characterized in that**
data are transmitted from a first local area network (LAN1) connected to the first router device (R1) via the first router device (R1) to the second router device (R2) and from the latter into a second local area network (LAN2) connected thereto.

5. Method according to one of the preceding claims,
**characterized in that**
the network address (ATM2) is allocated to the transmitted hardware address (MAC2) in the network gateway unit (N1) using an allocation table (ZT), in which one or more hardware addresses (MAC1, MAC2, MAC3), which are provided to identify router devices (R1, R2, R3) and which are allocated in each case to a network address (ATM1, ATM2, ATM3), are stored.

6. Method according to Claim 5,
**characterized in that**
an IP address (IP1, IP2, IP3) of the router device (R1, R2, R3) identified by the respective hardware address, said address being allocated to a hardware address (MAC1, MAC2, MAC3) which is stored in the allocation table (ZT) and which is provided for identification of a router device (R1, R2, R3), is stored in the allocation table (ZT).

7. Method according to Claim 6,
**characterized in that**
an inquiry of the first router device (R1) relating to a hardware address of a router device which is identified by an IP address contained in the inquiry is answered by the network gateway unit (N1), the hardware address allocated to the relevant IP address in the allocation table (ZT) being transmitted from the network gateway unit (N1) to the first router device (R1).

8. Method according to one of the preceding claims,
**characterized in that**
a MAC address is used as the hardware address.

9. Method according to one of the preceding claims,
**characterized in that**
the data are transmitted in the communications network (ATM) via existing connections.

10. Method according to one of the preceding claims,
**characterized in that**
the data are transmitted in the communications network (ATM) via connections which are set up on demand.

11. Network gateway unit (N1) for connecting a first router device (R1) to a communications network (ATM) and for transmitting data from the first router device (R1) via the communications network (ATM) to at least one further router device (R2, R3), with
a) an allocation table (ZT), in which at least one hardware address (MAC2, MAC3), which is used by the first router device (R1) to identify the (at least one) further router device (R2, R3), is allocated in each case to a network address (ATM2, ATM3) which identifies an exit point (N2, R3) of the communications network (ATM) to the relevant further router device (R2, R3),
b) an address-checking device (AP) to check whether a hardware address arriving from the first router device (R1) matches a hardware address contained in the allocation table (ZT),
c) an address allocation device (AZ) for allocating the data which arrive from the first router device (R1) and which are allocated to a respective hardware address to a network address allocated to the respective hardware address in the allocation table (ZT), and
d) a protocol conversion device (PU) for converting and transmitting the data arriving from the first router device (R1) according to a transmission protocol used in the communications network (ATM), the network address allocated to the data being used as address information.

12. Network gateway unit according to Claim 11,
**characterized in that**
an IP address (IP1, IP2, IP3) of the router device (R1, R2, R3) identified by the relevant hardware address is allocated in the allocation table (ZT) to a hardware address (MAC1, MAC2, MAC3) recorded therein.

13. Network gateway unit according to Claim 12,
**characterized by**
an address resolution device for answering inquiries from the first router device (R1) relating to a hardware address of a router device which is identified by an IP address contained in the inquiry, by searching for the hardware address allocated to the IP address in the allocation table (ZT) and by transmitting it to the first router device (R1).

14. Network gateway unit according to one of Claims 11 to 13,
**characterized by**
means for entering address information into the allocation table (ZT).

15. Network gateway unit according to one of Claims 11 to 14,
**characterized in that**
the communications network (ATM) is an ATM network.

## Revendications

1. Procédé pour la transmission de données à partir d'un premier dispositif de routage (R1) accouplé à un réseau de communication (ATM) par l'intermédiaire d'une unité d'interface de réseau (N1), vers un deuxième dispositif de routage (R2) par le réseau de communication (ATM), dans lequel
a) une adresse de matériel (MAC2) est attribuée par le premier dispositif de routage (R1) aux données à transmettre, cette adresse étant prévue pour identifier, selon un protocole de routage utilisé, un dispositif de routage (R2) consécutif situé sur l'itinéraire d'acheminement des données vers la destination de transmission,
b) l'adresse de matériel (MAC2) et les données sont transmises depuis le premier dispositif de routage (R1) à l'unité d'interface de réseau (N1),
c) l'unité d'interface de réseau (N1) vérifie si l'adresse de matériel (MAC2) transmise est identique à une adresse de matériel enregistrée dans une mémoire de l'unité d'interface de réseau (N1), et si le résultat de la vérification est positif,
d) une adresse de réseau (ATM2) attribuée à l'adresse de matériel (MAC2) dans l'unité d'interface de réseau (N1) et identifiant un point de sortie (N2) du réseau de communication (ATM), est attribuée aux données par l'unité d'interface de réseau (N1),
e) l'adresse de réseau (ATM2) et les données sont transmises dans le réseau de communication (ATM) par l'unité d'interface de réseau (N1) après une transposition selon un protocole utilisé dans le réseau de communication (ATM), et
f) les données sont transmises depuis le réseau de communication (ATM) au point de sortie (N2) déterminé par l'adresse de réseau (ATM2) où les données sont acheminées vers le deuxième dispositif de routage (R2).

2. Procédé selon la revendication 1,
**caractérisé en ce que** le deuxième dispositif de routage (R2) est accouplé au réseau de communication (ATM) par l'intermédiaire d'une deuxième unité d'interface de réseau (N2) à titre de point de sortie,
une adresse de matériel (MAC2) identifiant le deuxième dispositif de routage (R2) est attribuée aux données par la deuxième unité d'interface de réseau (N2), et
les données sont transmises au deuxième dispositif de routage (R2) par la deuxième unité d'interface de réseau (N2).

3. Procédé selon la revendication 1,
**caractérisé en ce que** le deuxième dispositif de routage est accouplé au réseau de communication sous forme d'un point de sortie identifié par l'adresse de réseau et reçoit les données du réseau de communication.

4. Procédé selon l'une des revendications précédentes,
**caractérisé en ce que** des données sont transmises à partir d'un premier réseau local (LAN1) connecté au premier dispositif de routage (R1) par l'intermédiaire du premier dispositif de routage (R1) au deuxième dispositif de routage (R2) et ensuite depuis ce dernier à un deuxième réseau local (LAN2) connecté au deuxième dispositif de routage (R2).

5. Procédé selon l'une des revendications précédentes,
**caractérisé en ce que** l'attribution de l'adresse de réseau (ATM2) à l'adresse de matériel (MAC2) transmise est effectuée au sein de l'unité d'interface de réseau (N1) à l'aide d'une table de coordination (ZT) dans laquelle une ou plusieurs adresses de matériel (MAC1, MAC2, MAC3), prévues pour identifier des dispositifs de routage (R1, R2, R3) sont enregistrées sous forme affectée chacune à une adresse de réseau (ATM1, ATM2, ATM3).

6. Procédé selon la revendication 5,
**caractérisé en ce qu'**une adresse IP (IP1, IP2, IP3) du dispositif de routage (R1, R2, R3) identifié par l'adresse de matériel correspondante, coordonnée à une adresse de matériel (MAC1, MAC2, MAC3) prévue pour identifier un dispositif de routage (R1, R2, R3) , est enregistrée dans la table de coordination (ZT).

7. Procédé selon la revendication 6,
**caractérisé en ce que** l'unité d'interface de réseau (N1) répond à une demande provenant du premier dispositif de routage (R1 ) concernant l'adresse de matériel d'un dispositif de routage qui est identifié par une adresse IP contenue dans la demande, l'unité d'interface de réseau (N1) transmettant au premier dispositif de routage (R1) l'adresse de matériel coordonnée à l'adresse IP correspondante dans la table de coordination (ZT).

8. Procédé selon l'une des revendications précédentes,
**caractérisé en ce qu'**une adresse MAC est utilisée à titre d'adresse de matériel.

9. Procédé selon l'une des revendications précédentes,
**caractérisé en ce que** les données sont transmises au sein du réseau de communication (ATM) par des connexions existantes.

10. Procédé selon l'une des revendications précédentes,
**caractérisé en ce que** les données sont transmises au sein du réseau de communication (ATM) par des connexions établies en cas de besoin.

11. Unité d'interface de réseau (N1) pour connecter un premier dispositif de routage (R1) à un réseau de communication (ATM) et pour transmettre des données à partir du premier dispositif de routage (R1 ) par le réseau de communication (ATM) vers au moins un dispositif de routage additionnel (R2, R3), comprenant
a) une table de coordination (ZT) dans laquelle au moins une adresse de matériel (MAC2, MAC3) qui est utilisée par le premier dispositif de routage (R1) pour identifier le au moins un dispositif de routage additionnel (R2, R3), est coordonnée à une adresse de réseau (ATM2, ATM3) identifiant un point de sortie (N2, N3) du réseau de communication (ATM) vers le dispositif de routage correspondant (R2, R3),
b) un dispositif de vérification d'adresse (AP) pour vérifier si une adresse de matériel provenant du premier dispositif de routage (R1) concorde avec une adresse de matériel contenue dans la table de coordination (ZT),
c) un dispositif d'attribution d'adresses (AZ) pour attribuer les données provenant du premier dispositif de routage (R1) et attribuées à une adresse de matériel respective, à une adresse de réseau coordonnée à l'adresse de matériel respective dans la table de coordination (ZT), et
d) un dispositif de transposition de protocole (PU) pour transposer et transférer des données provenant du premier dispositif de routage (R1) selon un protocole de transmission utilisé dans le réseau de communication (ATM), l'adresse de réseau attribuée aux données servant d'information d'adresse.

12. Unité d'interface de réseau selon la revendication 11,
**caractérisée en ce que**, dans la table de coordination (ZT), une adresse IP (IP1, IP2, IP3) d'un dispositif de routage (R1, R2, R3) identifié par une adresse de matériel (MAC1, MAC2, MAC3), est attribuée à cette adresse de matériel enregistrée dans la table de coordination.

13. Unité d'interface de réseau selon la revendication 12,
**caractérisée par** un dispositif de résolution d'adresses pour répondre aux demandes formulées par le premier dispositif de routage (R1) concernant l'adresse de matériel d'un dispositif de routage identifié par une adresse IP contenue dans la demande, en cherchant l'adresse de matériel attribuée à l'adresse IP dans la table de coordination (ZT) et en l'envoyant au premier dispositif de routage (R1).

14. Unité d'interface de réseau selon l'une des revendications 11 à 13,
**caractérisée par** des moyens pour entrer des informations d'adresse dans la table de coordination (ZT).

15. Unité d'interface de réseau selon l'une des revendications 11 à 14,
**caractérisée en ce que** le réseau de communication (ATM) est un réseau ATM.
